# DEMANDE DE BREVET EUROPEEN

(11) **EP 1 209 823 A1**
(43) Date de publication de la demande: **29.05.2002**
(21) Numéro de dépôt: 01402587.8
(22) Date de dépôt: 08.10.2001
(51) Int. Cl.: H04B 7/185

(54) **Procédé et système de télécommunication multimedia par satellites**

(30) Priorité: 24.11.2000 FR 0015220
(71) Demandeur: ALCATEL, 75008 Paris (FR)
(72) Inventeur: Cohen, Michel, 75011 Paris (FR); Delayre, Alain, 94240 l'Hay les Roses (FR); Henrotte, Anne, 75008 Paris (FR); Rouffet, Denis, 92100 Boulogne Billancourt (FR); Blineau, Joseph, 78700 Conflans Ste Honorine (FR)
(74) Mandataire: Smith, Bradford Lee

(57) **Abrégé**

L'invention concerne un procédé de diffusion d'informations collectives à travers un système de télécommunications par satellites non géostationnaires (21,22) assurant des connexions individuelles interactives, système dans lequel chaque abonné dispose d'un terminal de communication (24,25) comprenant deux chaînes (A, B) d'émission/réception de données aptes chacune à échanger des données avec un satellite indépendamment de l'autre chaîne, les deux chaînes étant vouées à être utilisées alternativement au rythme des passages des satellite de sorte qu'entre deux changements de satellites, l'une (A) des chaînes est active et l'autre (B) est gardée en réserve. Selon l'invention, on fait diffuser les informations collectives à tous les satellites (21,22) sur au moins une porteuse dédiée à cette utilisation et on fait recevoir ladite porteuse dédiée à la chaîne (B) gardée en réserve de chaque terminal (24,25).

L'invention concerne également un terminal de communication pour un système de télécommunication et un tel système de télécommunication.

## Description

La présente invention concerne un procédé et un système de télécommunication par satellites non géostationnaires assurant simultanément des connexions individuelles interactives et une diffusion d'informations collectives, ainsi qu'un terminal de communication appartenant à un tel système.

Au sens de la présente description, on entend par informations collectives des informations intéressant tous ou partie des utilisateurs d'un système de communication, sans possibilité pour l'émetteur de ces informations de sélectionner individuellement chaque récepteur potentiel de ces informations.

On désigne généralement ce type de diffusion par les termes de "broadcast", lorsqu'il s'agit d'une diffusion sur l'ensemble d'une population, et de "multicast" lorsque les destinataires des informations sont un sous-ensemble de cette population.

Dans un système de télécommunication multimédia appuyé sur une constellation de satellites, la population des destinataires potentiels d'une information collective est limitée aux possesseurs de terminaux de réception se trouvant dans la zone de couverture, ou cellule de diffusion, de la constellation de satellites. On parle alors préférentiellement de diffusion multicast.

On sait que, dans un tel système, chaque abonné établit sa connexion par le biais d'une porteuse qui lui est spécifique et dont les modulations permettent des échanges de données entre le terminal de l'abonné et le ou les serveurs avec lesquels il communique.

Les données provenant du serveur sont relayées par une station de connexion terrestre, qui les envoie à un satellite sous forme de signaux radioélectriques. Le satellite amplifie ces signaux et en modifie la fréquence (pour des raisons techniques qui ne seront pas exposées ici) pour les envoyer au terminal de l'abonné.

Les données envoyées par l'abonné à destination du serveur empruntent un trajet inverse : du terminal de l'abonné vers le satellite, du satellite vers la station de connexion terrestre, de la station de connexion terrestre vers le serveur terrestre.

Le choix du satellite à utiliser pour échanger des données avec le terminal de l'abonné est à la charge de la station de connexion, qui connaît l'emplacement géographique fixe du terminal de l'abonné ainsi que la position instantanée de chaque satellite.

Etant donné qu'ils ont des altitudes relativement basses, les satellites ne sont pas géostationnaires et défilent au dessus de la cellule de diffusion. Ils se relaient pour assurer la continuité de la connexion de chaque abonné.

Un des rôles majeurs de la station de connexion est de gérer ce défilement des satellites au-dessus de la cellule de diffusion, en choisissant le successeur de tout satellite quittant la cellule de diffusion et en déterminant l'instant le plus approprié pour faire basculer la connexion de chaque abonné du satellite sortant au satellite entrant.

A l'intérieur du terminal de l'abonné, un dispositif est prévu pour assurer le changement de satellite sans perte de connexion, et ce au moment choisi par la station de connexion. Ce dispositif consiste en deux chaînes d'émission/réception comportant chacune sa propre antenne indépendante, de sorte que chacune des deux chaînes peut suivre un satellite différent de celui suivi par l'autre chaîne.

Tant que le terminal demeure en liaison avec le même satellite, une seule chaîne lui suffit pour échanger des données et l'autre chaîne est gardée en réserve.

Lorsque le satellite est sur le point de ne plus couvrir le terminal, il faut préparer le basculement de la connexion du satellite sortant à un satellite entrant. L'antenne de la chaîne gardée en réserve pointe alors sur le satellite entrant et, lorsque l'échange de données devient possible sur cette chaîne avec le satellite entrant, le terminal bascule sur cette chaîne qui devient la chaîne active, tandis que l'autre chaîne devient la chaîne de réserve.

Par cette utilisation alternée des deux chaînes du terminal, le passage d'un satellite à son successeur s'opère sans interruption de la connexion interactive.

De plus, la présence de deux chaînes d'émission/réception sur le terminal permet d'opérer des changements de porteuse en demeurant sur le même satellite, ce qui peut s'avérer utile si la porteuse en cours d'utilisation est très encombrée.

L'objectif de la présente invention est d'ajouter une diffusion de type multicast à un tel système de télécommunication interactive, afin que les utilisateurs puissent continuer à échanger des données de manière interactive via leurs connexions individuelles, tout en recevant, parallèlement, des informations collectives. De telles informations collectives peuvent être, par exemple, des bandes annonces, des programmes radiophoniques ou télévisuels, ou des logiciels spécifiques intéressant les abonnés de la cellule de diffusion, tels que des logiciels d'exploitation des terminaux eux-mêmes ou encore des programmes de formation.

La présente invention a pour objet un procédé de diffusion d'informations collectives à travers un système de télécommunications par satellites non géostationnaires assurant des connexions individuelles interactives, système dans lequel chaque abonné dispose d'un terminal de communication comprenant deux chaînes d'émission/réception de données aptes chacune à échanger des données avec un satellite indépendamment de l'autre chaîne, les deux chaînes étant vouées à être utilisées alternativement au rythme des passages des satellite de sorte qu'entre deux changements de satellites, l'une des chaînes est active et l'autre est gardée en réserve, ce procédé étant **caractérisé en ce qu**'il consiste à faire diffuser les informations collectives à tous les satellites sur au moins une porteuse dédiée à cette utilisation et à faire recevoir ladite porteuse dédiée à la chaîne gardée en réserve de chaque terminal.

Bien entendu, si une cellule de diffusion est couverte par plusieurs satellites, seuls ceux qui sont actifs sur cette cellule sont concernés par l'invention.

L'invention consiste donc à tirer profit de la présence de la chaîne gardée en réserve entre deux changements de satellite pour permettre au terminal de recevoir des informations collectives.

Dans ce cas, la chaîne de réserve ne fonctionne qu'en mode réception car, compte tenu du caractère global des informations transmises, cette diffusion multicast n'est pas interactive.

L'invention est particulièrement intéressante sur le plan matériel car elle optimise l'utilisation des terminaux sans accroître leur prix de revient et sans modifier sensiblement le reste du système de télécommunication.

Il convient de noter que la disponibilité de la chaîne gardée en réserve se borne aux périodes comprises entre deux changements de satellites, car la préparation au basculement sur le nouveau satellite mobilise ladite chaîne gardée en réserve pendant la durée nécessaire pour pointer son antenne sur ce nouveau satellite, acquérir la ou les porteuses de données de connexion interactive sur le nouveau satellite et acquérir la ou les porteuses de données de diffusion d'informations collectives sur l'ancienne chaîne active, devenue chaîne de réserve, en utilisant l'antenne pointée sur le nouveau satellite.

Dans un mode de mise en oeuvre particulier de l'invention, l'émission des informations collectives tient compte des interruptions de disponibilité de la chaîne gardée en réserve afin que tous les abonnés reçoivent les mêmes données.

A cet effet, l'émission des informations collectives peut répéter systématiquement des paquets de données avec une période au moins égale à la durée complète de basculement de toute la cellule de diffusion d'un satellite sortant vers un satellite entrant.

Cette durée dépend évidemment de la constellation de satellites et de la latitude à laquelle se trouve le terminal concerné. Généralement, cette durée n'est pas supérieure à quelques secondes.

En tout état de cause, la période retenue conviendra également pour faire face à des interruptions de disponibilité de la chaîne gardée en réserve du fait de changements de porteuse sur un même satellite, car ces interruptions sont plus courtes que pour des changements de satellites.

L'avantage de cette première solution est sa grande simplicité et son aptitude à s'accommoder de toutes les situations de changement de satellite possibles.

Une autre solution peut consister à ne répéter les paquets de données que pendant les périodes de basculement de tous les terminaux de la cellule de diffusion d'un satellite à l'autre.

Le fait de régler le problème de l'interruption de la porteuse de diffusion d'informations collectives par un mode de diffusion particulier évite d'avoir à prévoir un dispositif spécifique de gestion des interruptions à l'intérieur de la station de connexion, dont le rôle principal reste de gérer le défilement des satellites au regard des connexions individuelles interactives, d'où une conservation et une optimisation des infrastructures préexistantes

L'invention a également pour objet un terminal de communication d'un système de télécommunications par satellites non géostationnaires assurant des connexions individuelles interactives, ledit terminal de communication comprenant deux chaînes d'émission/réception de données aptes chacune à échanger des données avec un satellite indépendamment de l'autre chaîne, les deux chaînes étant vouées à être utilisées alternativement au rythme des passages des satellite de sorte qu'entre deux changements de satellites, l'une des chaînes est active et l'autre est gardée en réserve, **caractérisé en ce que** sa chaîne gardée en réserve est apte à recevoir des informations collectives entre deux changements de satellite.

Dans un mode de réalisation particulier de l'invention, le terminal comporte une zone de mémoire tampon de stockage et/ou de compensation pour fournir des données constitutives des informations collectives en sortie de la chaîne gardée en réserve lors des périodes de changement de satellite.

La présente invention a également pour objet un système de télécommunications par satellites non géostationnaires assurant des connexions individuelles interactives, comprenant un ensemble de terminaux de communication tels que décrits ci-dessus, **caractérisé en ce que** chaque satellite est apte à diffuser, en plus des porteuses de connexions individuelles, une porteuse dédiée à des informations collectives.

Afin de faciliter la compréhension de l'invention, un exemple de réalisation non limitatif va maintenant en être décrit, à l'aide des dessins annexés dans lesquels :
- la figure 1 est une représentation schématique de deux chaînes d'émission/réception d'un terminal,
- la figure 2 est une vue en perspective d'une cellule de diffusion couverte par deux satellites,
- la figure 3 est un chronogramme illustrant la succession d'opérations exécutées dans le terminal à l'occasion d'un changement de satellite,
- la figure 4 est un chronogramme illustrant la succession d'opérations exécutées dans le terminal à l'occasion d'un changement de porteuse dans un même satellite.

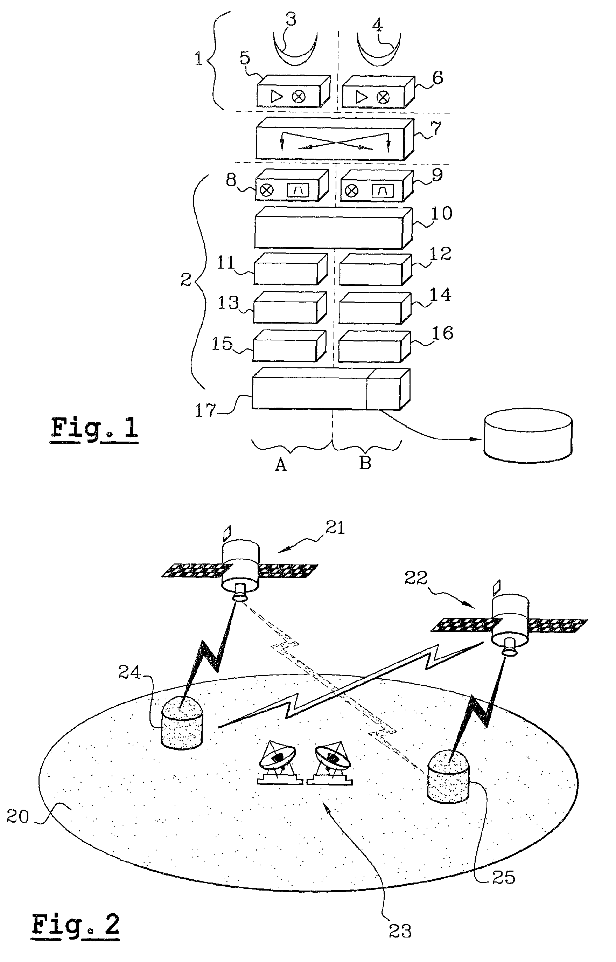

Les deux chaînes A et B d'émission/réception représentées à la figure 1 ont une composition identique, constituée d'une partie de réception 1 et d'une partie de traitement du signal 2.

Chaque partie de réception comporte une antenne indépendante 3,4, apte à être pointée sur un satellite de la constellation formant le système de télécommunication.

L'antenne 3,4 est reliée à un dispositif électronique 5,6 assurant les fonctions d'amplification à faible bruit et de transposition en fréquence du signal radioélectrique reçu par l'antenne.

Une matrice de commutation 7, commune aux deux chaînes, relie les parties de réception 1 aux parties de traitement du signal 2 et autorise aussi bien le branchement des parties de traitement du signal des deux chaînes sur une seule partie de réception, que le branchement de chaque partie de traitement du signal 2 sur la partie de réception de la même chaîne, ou encore le branchement de chaque partie de traitement du signal sur la partie de réception de l'autre chaîne.

Chaque partie de traitement du signal 2 comprend une série de dispositifs conventionnels qui ne seront pas détaillés ici, à savoir un filtre large bande 8,9, une unité commune d'acquisition de porteuse 10, une unité de poursuite 11,12, un démodulateur 13,14 et un décodeur 15,16.

Les deux chaînes partagent une même mémoire tampon 17 de compensation, laquelle a ici une capacité de stockage exceptionnellement élevée pour faire face aux interruptions de la porteuse d'informations collectives, comme cela va être décrit.

Comme on le voit à la figure 2, une cellule de diffusion 20 correspond à une zone géographique couverte par une constellation de satellite 21,22 dont deux seulement ont été représentés ici.

Les satellites 21,22 défilent au dessus de la cellule de diffusion d'est en ouest (c'est-à-dire de droite à gauche sur le dessin).

Une station de connexion 23, localisée de préférence dans une région centrale de la cellule de diffusion 20, assure la transmission de données entre les terminaux 24,25 des abonnés présents dans la cellule de diffusion et des serveurs (non représentés) connectés à ladite station 23, à travers les satellites 21,22 qui jouent le rôle de relais hertziens.

La station de connexion 23 connaît en permanence la situation géographique de chaque satellite. Elle connaît également l'emplacement de chaque terminal d'abonné et peut ainsi décider en temps réel du satellite à utiliser pour assurer le relais entre elle et chaque abonné.

La transmission de données entre le satellite 21,22 et le terminal 24,25 s'effectue par une des deux chaînes d'émission/réception dudit terminal. Tandis que cette chaîne est active, l'autre est gardée en réserve.

De manière connue, lorsque le satellite 21 s'apprête à ne plus couvrir le terminal 25 du fait de son défilement au dessus de la cellule de diffusion, la station de connexion 23 anticipe la disparition du satellite 21 en préparant le basculement de la liaison sur l'autre satellite 22, successeur du précédent dans le défilement des satellites au dessus de la cellule de diffusion.

On désignera dans la suite "satellite sortant" le satellite 21 s'apprêtant à quitter la cellule et "satellite entrant" celui 22 destiné à la remplacer.

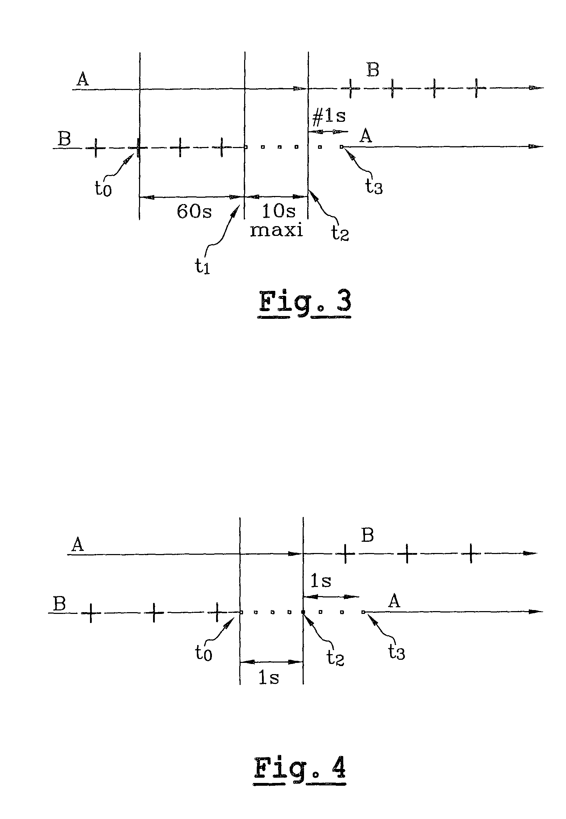

La procédure de changement de satellite est décrite en référence à la figure 3, sur laquelle on voit que la chaîne A du terminal est initialement utilisée pour assurer la connexion interactive de l'abonné, par exemple selon un protocole Internet, tandis que l'autre chaîne B, gardée en réserve dans l'état de la technique, sert ici à la réception d'informations collectives sur une porteuse commune à tous les satellites.

L'antenne 3 du terminal pointe sur le satellite sortant et la matrice de commutation 7 relie les deux parties de traitement du signal à cette antenne.

A l'instant t₀, la station de connexion 23 envoie au terminal 24, via le satellite 21 en cours d'utilisation, un ordre de préparation de changement de satellite.

Le terminal 24 reçoit cet ordre et oriente son autre antenne 4 sur le satellite entrant 22.

Au bout de quelques dizaines de secondes, cette antenne 4 pointe sur le satellite entrant 22.

La chaîne B cesse alors de servir à la réception d'informations collectives. La matrice de commutation 7 la relie à l'antenne 4 pointant sur le satellite entrant 22.

La chaîne B commence l'acquisition de la porteuse de protocole Internet. Cette opération prend généralement moins de 10 secondes.

Une fois l'acquisition effectuée (instant t₂), la chaîne B est apte à servir la connexion interactive de l'abonné via le satellite entrant. Le basculement est réalisé immédiatement par la matrice de connexion.

La chaîne A est ainsi libérée et la matrice de commutation modifie sa configuration de manière que cette chaîne A soit reliée à son tour à l'antenne 4 pointant sur le satellite entrant 22. Elle se met à acquérir la porteuse de diffusion de l'information collective.

L'acquisition étant terminée (instant t₃), la chaîne A reçoit les informations collectives comme le faisait la chaîne B avant le changement de satellite.

On constate que la disponibilité de la chaîne n'assurant pas la connexion n'est pas constante, du fait que chaque changement de satellite la mobilise.

Pour surmonter cette difficulté, on a prévu de diffuser de manière redondante des paquets de données du programme d'informations collectives.

Ainsi, les données perdues lors de la période d'indisponibilité de la chaîne de réserve sont nécessairement reçues avant ou après cette période d'indisponibilité. Grâce à la zone de mémoire tampon 17 de stockage et/ou de compensation prévue dans le terminal, les données peuvent être reconstituée en un flot continu sans redondance pour être fournies en sortie de la chaîne en vue de leur utilisation.

La figure 4 illustre une autre circonstance dans laquelle s'impose un changement de la chaîne d'émission/réception servant à la connexion interactive. Il s'agit du cas où le trafic interactif sur la porteuse adoptée par le satellite est très encombrée.

Dans une telle situation, on change de porteuse tout en conservant le même satellite.

Le protocole est voisin de celui précédemment décrit pour un changement de satellite, à ceci près qu'aucune visée vers un nouveau satellite n'est requise. Par conséquent, la durée d'indisponibilité de la chaîne de réception d'informations collectives est inférieure à 2 secondes et la solution de diffusion redondante précédemment décrite convient pour faire face à ces pertes de réception.

Le mode de mise en oeuvre décrit ci-dessus n'est aucunement limitatif. Il est fourni pour mieux faire comprendre l'invention, la portée de cette invention étant définie par les revendications annexées.

## Revendications

1. Procédé de diffusion d'informations collectives à travers un système de télécommunications par satellites non géostationnaires (21,22) assurant des connexions individuelles interactives, système dans lequel chaque abonné dispose d'un terminal (24,25) de communication comprenant deux chaînes (A, B) d'émission/réception de données aptes chacune à échanger des données avec un satellite indépendamment de l'autre chaîne, les deux chaînes étant vouées à être utilisées alternativement au rythme des passages des satellite de sorte qu'entre deux changements de satellites, l'une (A) des chaînes est active et l'autre (B) est gardée en réserve, **caractérisé en ce qu'il** consiste à faire diffuser les informations collectives à tous les satellites (21,22) sur au moins une porteuse dédiée à cette utilisation et à faire recevoir ladite porteuse dédiée à la chaîne (B) gardée en réserve de chaque terminal (24,25).

2. Procédé selon la revendication 1, **caractérisé en ce que** l'émission des informations collectives tient compte des interruptions de disponibilité de la chaîne (B) gardée en réserve afin que tous les abonnés reçoivent les mêmes données.

3. Procédé selon la revendication 2, **caractérisé en ce que** l'émission des informations collectives répète systématiquement des paquets de données avec une période au moins égale à la durée complète de basculement de toute la cellule de diffusion d'un satellite sortant vers un satellite entrant.

4. Procédé selon la revendication 2, **caractérisé en ce que** l'émission des informations collectives répète les paquets de données pendant et seulement pendant les périodes de basculement de tous les terminaux de la cellule de diffusion d'un satellite à l'autre.

5. Terminal de communication d'un système de télécommunications par satellites (21,22) non géostationnaires assurant des connexions individuelles interactives, ledit terminal (24,25) de communication comprenant deux chaînes (A, B)d'émission/réception de données aptes chacune à échanger des données avec un satellite indépendamment de l'autre chaîne, les deux chaînes étant vouées à être utilisées alternativement au rythme des passages des satellites de sorte qu'entre deux changements de satellites, l'une (A) des chaînes est active et l'autre (B) est gardée en réserve, **caractérisé en ce que** sa chaîne (B) gardée en réserve est apte à recevoir des informations collectives entre deux changements de satellite.

6. Terminal selon la revendication 5, **caractérisé en ce qu'**il comporte une zone de mémoire tampon (17) de stockage et/ou de compensation pour fournir des données constitutives des informations collectives en sortie de la chaîne gardée en réserve lors des périodes de changement de satellite.

7. Système de télécommunications par satellites non géostationnaires assurant des connexions individuelles interactives, comprenant un ensemble de terminaux (24,25) de communication selon l'une quelconque des revendications 5 et 6, **caractérisé en ce que** chaque satellite (21,22)est apte à diffuser, en plus des porteuses de connexions individuelles, une porteuse dédiée à des informations collectives.
